(19) Europäisches Patentamt
European Patent Office
Office européen des brevets

(11) Veröffentlichungsnummer: **0 043 904**
**A2**

(12) # EUROPÄISCHE PATENTANMELDUNG

(21) Anmeldenummer: **81103948.6**

(22) Anmeldetag: **22.05.81**

(51) Int. Cl.³: **C 09 K 3/34**
C 09 B 29/00, C 09 B 31/02
C 09 B 33/02, C 09 B 35/02
C 07 C 107/06, G 02 F 1/13

(30) Priorität: **10.07.80 CH 5299/80**
**07.05.81 CH 2966/81**

(43) Veröffentlichungstag der Anmeldung:
**20.01.82 Patentblatt 82/3**

(84) Benannte Vertragsstaaten:
**CH DE FR IT LI NL**

(71) Anmelder: **F. HOFFMANN-LA ROCHE & CO.**
**Aktiengesellschaft**

**CH-4002 Basel(CH)**

(72) Erfinder: **Boller, Arthur, Dr.**
**Benkenstrasse 65**
**CH-4102 Binningen(CH)**

(72) Erfinder: **Germann, Alfred**
**Alemannengasse 109**
**CH-4058 Basel(CH)**

(72) Erfinder: **Schadt, Martin, Dr.**
**Liestalerstrasse 77**
**CH-4411 Seltisberg(CH)**

(72) Erfinder: **Villiger, Alois, Dr.**
**Im Ettingerhof 5**
**CH-4055 Basel(CH)**

(74) Vertreter: **Cottong, Norbert A. et al,**
**Grenzacherstrasse 124 Postfach 3255**
**CH-4002 Basel(CH)**

(54) **Farbstoffhaltige Mischungen, neue Farbstoffe und deren Verwendung in Flüssigkristallmischungen.**

(57) Farbstoffhaltige Flüssigkristallmischung enthaltend etwa 5 bis etwa 40 Gew.-% trans-p-[5-(4-Alkylcyclohexyl)-2-pyrimidinyl]benzonitrile, etwa 10 bis etwa 60 Gew.-% trans-4-Alkylcyclohexancarbonsäure-phenylester und einen oder mehrere Farbstoffe der allgemeinen Formel

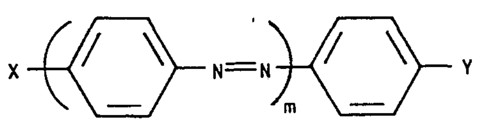

XII

worin m für die Zahl 1 steht und X Alkoxy und Y Nitro bedeuten; oder m für die Zahlen 1 oder 2 steht, und X p-Alkoxyphenyl und Y Nitro oder Dialkylamino bezeichnen, oder X Alkoxy und Y p-Nitrophenyl oder p-(Dialkylamino)phenyl darstellen; oder m für die Zahl 2 steht, und X Alkoxy und Y Alkoxy, Nitro oder Dialkylamino bedeuten, oder beide Reste X und Y Dialkylaminogruppen darstellen, und Alkoxy geradkettige Reste mit 1 bis 12 Kohlenstoffatomen und Alkyl in den Dialkylaminogruppen geradkettige Reste mit 1 bis 4 Kohlenstoffatomen umfassen.

Diese Mischungen zeichnen sich besonders durch einen grossen Ordnungsgrad und einen hohen Kontrast bei Verwendung in elektro-optischen Vorrichtungen aus.

Ferner werden neue Farbstoffe, nämlich die Verbindungen der Formel XII, sofern nicht zugleich m 1, X Alkoxy und Y Nitro bedeuten, beschrieben sowie die Verwendung der Verbindungen der Formel XII in Flüssigkristallmischungen.

EP 0 043 904 A2

0043904

F.Hoffmann-La Roche & Co. Aktiengesellschaft,Basel,Schweiz

RAN 6220/019

# Farbstoffhaltige Mischungen, neue Farbstoffe und deren Verwendungen in Flüssigkristallmischungen

Die vorliegende Erfindung betrifft farbstoffhaltige Flüssigkristallmischungen, deren Herstellung und deren Verwendung in elektro-optischen Vorrichtungen, sowie neue Farbstoffe.

Die erfindungsgemässen Mischungen sind dadurch gekennzeichnet, dass sie etwa 5 bis etwa 40 Gew.-% trans-p-[5-(4-Alkylcyclohexyl)-2-pyrimidinyl]benzonitrile der allgemeinen Formel

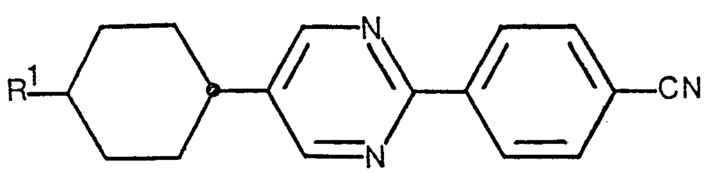
I

worin $R^1$ eine geradkettige Alkylgruppe mit 2 bis 7 Kohlenstoffatomen bedeutet,

etwa 10 bis etwa 60 Gew.-% trans-4-Alkylcyclohexancarbonsäure-phenylester der allgemeinen Formel

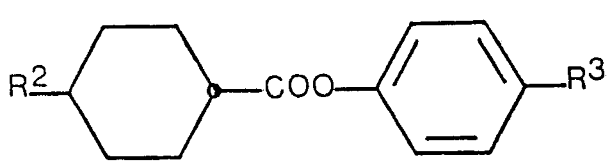
II,

Zim/ 11.5.1981

worin $R^2$ eine geradkettige Alkylgruppe mit 2 bis 6 Kohlenstoffatomen und $R^3$ die Cyanogruppe oder eine geradkettige Alkoxygruppe mit 1 bis 6 Kohlenstoffatomen bedeutet,

und etwa 0,1 bis etwa 15 Gew.-% eines oder mehrerer Farbstoffe der allgemeinen Formel

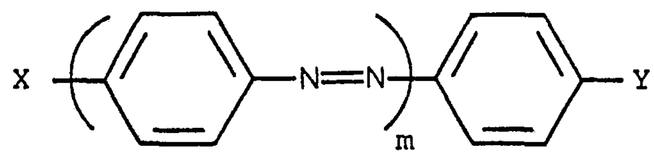

XII

worin m für die Zahl 1 steht und X Alkoxy und Y Nitro bedeuten; oder m für die Zahlen 1 oder 2 steht, und X p-Alkoxyphenyl und Y Nitro oder Dialkylamino bezeichnen, oder X Alkoxy und Y p-Nitrophenyl oder p-(Dialkylamino)phenyl darstellen; oder m für die Zahl 2 steht, und X Alkoxy und Y Alkoxy, Nitro oder Dialkylamino bedeuten, oder beide Reste X und Y Dialkylaminogruppen darstellen; und Alkoxy geradkettige Reste mit 1 bis 12 Kohlenstoffatomen und Alkyl in den Dialkylaminogruppen geradkettige Reste mit 1 bis 4 Kohlenwasserstoffatomen umfassen,

enthalten.

Der Ausdruck "geradkettige Alkylgruppe" und der Alkylteil einer "geradkettigen Alkoxygruppe" bedeuten im Rahmen der vorliegenden Erfindung je nach der Zahl der angegebenen Kohlenstoffatome Methyl, Aethyl, Propyl, Butyl, Pentyl, Hexyl, Heptyl, Octyl, Nonyl, Decyl, Undecyl und Dodecyl.

Die Farbstoffe einer farbstoffhaltigen Flüssigkristallmischung müssen, damit diese für elektro-optische Zwecke geeignet ist, mehrere Anforderungen erfüllen. Sie müssen chemisch stabil sein und dürfen in einem elektrischen Feld nicht ionisieren, da sonst die Leitfähigkeit der Mischung in unerwünschter Weise erhöht würde. Ferner müssen sie eine gute Stabilität gegen UV-Strahlung aufweisen. Wichtig ist

ebenfalls, dass sie geeignete Spektren besitzen, da je nach spektraler Verteilung der Farbeindruck beeinflusst wird, und bei Verwendung mehrerer Farbstoffe die Breite des möglichen Farbspektrums eingeschränkt werden kann. Ausserdem müssen sie eine hohe Extinktion besitzen und in der verwendeten Flüssigkristallmatrix gut löslich sein. Zudem sollte der flüssigkristalline Bereich der Matrix bei Zugabe eines Farbstoffes möglichst wenig verkleinert werden. Die verwendeten Farbstoffe müssen untereinander und mit der Flüssigkristallmatrix kompatibel sein, d.h. es dürfen keine Reaktionen der Mischungskomponenten eintreten, insbesondere auch keine photochemischen Reaktionen, die durch Absorption eines beigemischten Farbstoffes ausgelöst werden könnten (d.h. sie dürfen nicht als Sensibilisator wirken). Zur Erzielung eines hohen Kontrastes bei Flüssigkristalldisplays, bei welchen irgendeine Form des "Guest-Host-Effektes" verwendet wird, ist ferner ein grosser Ordnungsgrad des Farbstoffes notwendig. In diesem Zusammenhang ist jedoch auch die Wahl geeigneter Flüssigkristallkomponenten zu berücksichtigen, da insbesondere der Ordnungsgrad und die Löslichkeit von der verwendeten Flüssigkristallmatrix abhängen.

Die bisher verwendeten farbstoffhaltigen Flüssigkristallmischungen hatten vor allem den Nachteil, dass entweder die Löslichkeit und der Ordnungsgrad der Farbstoffe zu klein oder die Stabilität gegen UV-Strahlung ungenügend war.

Es wurde nun gefunden, dass die Farbstoffe der Formel XII alle oben genannten Anforderungen erfüllen, wenn sie in Flüssigkristallmischungen enthaltend Verbindungen der Formeln I und II verwendet werden. Insbesondere sind die Verbindungen der Formel XII zum grössten Teil selbst flüssigkristallin, was dazu führt, dass der flüssigkristalline Bereich der Basismischungen bei Zusatz von Farbstoffen der Formel XII häufig sogar leicht vergrössert wird.

Die obige Formel XII umfasst sowohl gelbe Farbstoffe, nämlich die Verbindungen der allgemeinen Formel

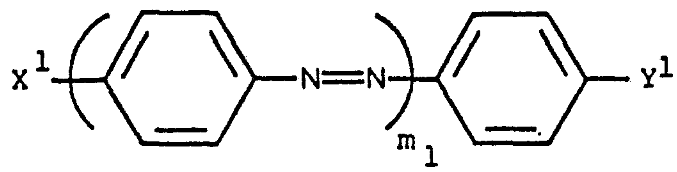

XIII

worin $m_1$ für die Zahl 1 steht, und $X^1$ Alkoxy und $Y^1$ Nitro, p-Nitrophenyl oder p-(Dialkylamino)phenyl bedeuten, oder $X^1$ p-Alkoxyphenyl und $Y^1$ Nitro oder Dialkylamino bezeichnen; oder $m_1$ für die Zahl 2 steht, und $X^1$ p-Alkoxyphenyl und $Y^1$ Nitro bedeuten, oder $X^1$ Alkoxy und $Y^1$ p-Nitrophenyl, Alkoxy oder Nitro darstellen; und Alkoxy geradkettige Reste mit 1 bis 12 Kohlenstoffatomen und Alkyl in den Dialkylaminogruppen geradkettige Reste mit 1 bis 4 Kohlenstoffatomen umfassen,

als auch rote Farbstoffe, nämlich die Verbindungen der allgemeinen Formel

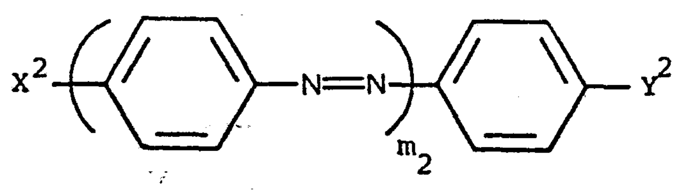

XIV

worin $m_2$ für die Zahl 2 steht, und $X^2$ p-Alkoxyphenyl und $Y^2$ Dialkylamino bedeuten, oder $X^2$ Alkoxy und $Y^2$ p-(Dialkylamino)phenyl oder Dialkylamino bezeichnen, oder beide Reste $X^2$ und $Y^2$ Dialkylaminogruppen darstellen; und Alkoxy geradkettige Reste mit 1 bis 12 Kohlenstoffatomen und Alkyl in den Dialkylaminogruppen geradkettige Reste mit 1 bis 4 Kohlenstoffatomen umfassen.

Die erfindungsgemässen Mischungen enthalten bevorzugt etwa 0,1 bis etwa 10 Gew.-% an Verbindungen der Formel XIII und/oder etwa 0,1 bis etwa 5 Gew.-% an Verbindungen der Formel XIV.

Durch Mischen dieser Verbindungen und/oder Zugabe eines oder mehrerer zusätzlicher Farbstoffe können weitere Farben erzeugt werden. Als zusätzliche Farbstoffe sind die Verbindungen der allgemeinen Formel

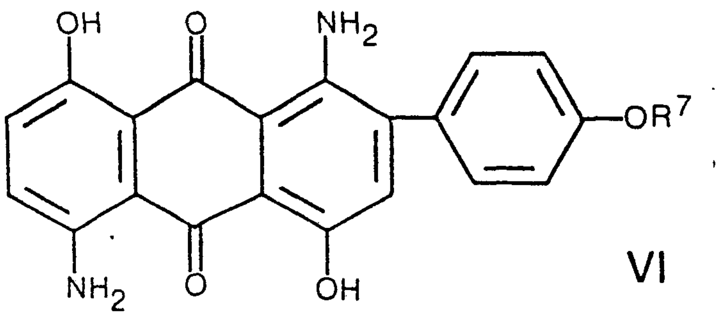

VI

worin $R^7$ eine geradkettige Alkylgruppe mit 5 bis 8 Kohlenstoffatomen bedeutet,

besonders geeignet. Diese Verbindungen der Formel VI sind blaue Farbstoffe. In Mischungen, welche zusätzlich einen oder mehrere Farbstoffe der Formel VI enthalten, beträgt der Anteil dieser Farbstoffe zweckmässigerweise etwa 0,1 bis etwa 5 Gew.-% und vorzugsweise bis zu etwa 3 Gew.-%.

Die Farbstoffe der Formeln XII und VI zeichnen sich vor allem aus durch ihren hohen Ordnungsgrad und die gute Löslichkeit in Mischungen mit Verbindungen der Formeln I und II, sowie durch eine gute UV-Stabilität. Insbesondere letzteres muss für die Verbindungen der Formel XII als äusserst überraschend betrachtet werden, da Azofarbstoffe im allgemeinen nur eine geringe UV-Stabilität aufweisen. Da die Glasplatten in elektro-optischen Anzeigevorrichtungen zudem als UV-Filter wirken, ermöglichen die erfindungsgemässen Mischungen die Herstellung von Anzeigevorrichtungen mit hoher Lebensdauer, welche durch den Einbau zusätzlicher UV-Filter noch gesteigert werden kann.

Da sich die Absorptionsbereiche der Verbindungen der Formeln XII und VI gut ergänzen, lassen sich durch geeignetes Mischen Flüssigkristallmischungen praktisch jeder

Farbe, insbesondere auch schwarze Mischungen, herstellen. Ferner sind diese Farbstoffe kompatibel. Die erfindungsgemässen Mischungen besitzen ausserdem kleine Viskositäten, eine grosse positive Anisotropie der Dielektrizitätskonstanten, niedere Schwellenspannungen und kurze Ansprechzeiten bei Verwendung in elektro-optischen Vorrichtungen.

Dank des hohen Ordnungsgrades der Farbstoffe in den erfindungsgemässen Mischungen - was besonders zutrifft für die Verbindungen der Formel XII, welche mindestens 3 Benzolringe aufweisen - kann in elektro-optischen Vorrichtungen auch ohne Verwendung von Polarisatoren ein hoher Kontrast erzielt werden. Dadurch wird erreicht, dass die Anzeigen auch dann noch gut sichtbar sind, wenn der Winkel zwischen der Anzeigeebene und der Betrachtungsrichtung sehr klein ist. Dies gilt insbesondere auch für die schwarzen Mischungen, die die bevorzugte Ausführungsform der vorliegenden Erfindung darstellen.

Ein Beispiel der erfindungsgemässen Mischungen sind die Mischungen, welche neben den Verbindungen der Formeln I und II als Farbstoffe der Formel XII eine oder mehrere Verbindungen der folgenden allgemeinen Formeln

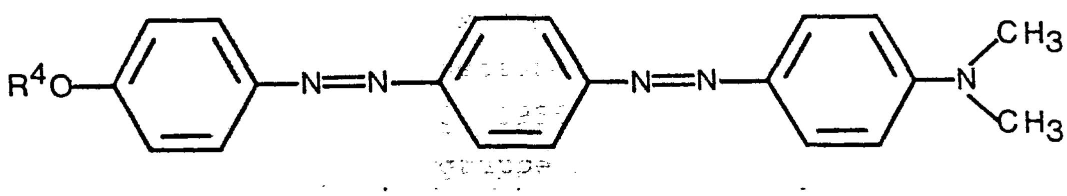

III

worin $R^4$ eine geradkettige Alkylgruppe mit 1 bis 9 Kohlenstoffatomen bedeutet,

und/oder

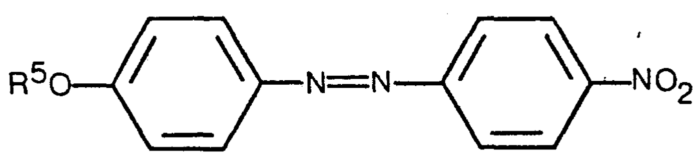

IV

worin $R^5$ eine geradkettige Alkylgruppe mit 1 bis 9 Kohlenstoffatomen bedeutet,

enthalten, wobei die Verbindungen der Formel III in einer Menge von 0 bis etwa 3 Gew.-% und die Verbindungen der Formel IV in einer Menge von 0 bis etwa 10 Gew.-% vorliegen, und die Menge der Farbstoffe der Formeln III und IV insgesamt mindestens etwa 0,3 Gew.-% beträgt. Bevorzugt ist eine Farbstoff-Gesamtkonzentratioon von etwa 1 bis etwa 10 Gew.-% und besonders bevorzugt etwa 1,5 bis etwa 7 Gew.-% an Verbindungen der Formeln III und IV.

Die Verbindungen der Formeln XII und VI können in analoger Weise zu bekannten Azo- und Anthrachinonfarbstoffen hergestellt werden.

Die Verbindungen der Formel III können beispielsweise durch Verätherung der Verbindung der Formel III, worin $R^4$ Wasserstoff bedeutet (bekannt aus Meldola, J. Chem. Soc. 45 [1884] 111; Beilstein 16, 337), mit dem entsprechenden 1-Bromalkan in Aethanol in Gegenwart von Kaliumcarbonat erhalten werden.

Zur Herstellung der Verbindungen der Formel IV, worin $R^5$ Alkyl bedeutet, kann beispielsweise 4-Nitro-4'-hydroxyazobenzol (bekannt aus Chem. Ber. 38 [1905] 3208) mit dem entsprechenden 1-Bromalkan in Aethanol in Gegenwart von Kaliumcarbonat veräthert werden.

Zur Herstellung einer Verbindung der Formel XII, worin X und Y Alkoxy bedeuten und m = 2 ist, kann beispielsweise die Nitrogruppe der entsprechenden Verbindung der Formel IV mit Natriumhydrogensulfid in Aethanol nach Houben-Weyl XI/1, 418 zur Aminogruppe reduziert, das erhaltene 4-Amino-4'-alkoxyazobenzol mit Natriumnitrit und Salzsäure in das Diazoniumchlorid übergeführt und dieses mit Phenol und Natronlauge umgesetzt und anschliessend mit dem entsprechenden 1-Bromalkan in Aethanol in Gegenwart von Kaliumcarbonat und Natriumjodid veräthert werden.

Die Herstellung einer Verbindung der Formel XII, worin m = 2 ist und X Alkoxy und Y Nitro bedeuten, kann beispielsweise durch Umsetzung des oben beschriebenen 4-Amino-4'-alkoxyazobenzols mit 4-Nitro-nitrosobenzol (analog zu Chem. Ber. 88 (1955) 1673) erfolgen.

Zur Herstellung einer Verbindung der Formel XII, worin m = 2 ist und X Alkoxy und Y Dialkylamino bedeuten, kann beispielsweise 4-Amino-4'-alkoxyazobenzol mit Natriumnitrit und Salzsäure in das Diazoniumsalz übergeführt und dieses mit N,N-Dialkylanilin umgesetzt werden.

Zur Herstellung einer Verbindung der Formel XII, worin m = 2 ist und X und Y Dialkylaminogruppen bedeuten, kann beispielsweise p-Nitroanilin mit Natriumnitrit und Salzsäure in das Diazoniumsalz übergeführt und dieses mit einem N,N-Dialkylanilin umgesetzt, die erhaltene Verbindung mit Natriumhydrogensulfid in Aethanol zu 4-Amino-4'-(dialkylamino)azobenzol reduziert, und dieses erneut mit Natriumnitrit und Salzsäure in das Diazoniumsalz übergeführt und dann mit einem N,N-Dialkylanilin umgesetzt werden.

Die Verbindungen der Formel XII, worin m = 1 ist und X p-Alkoxyphenyl und Y Nitro bedeuten, können beispielsweise ausgehend von 4-Amino-4'-hydroxybiphenyl (bekannt aus Chem. Ber. 27 (1894) 2629) durch Umsetzung mit 4-Nitro-nitrosobenzol analog zu Chem. Ber. 88 (1955) 1673 und anschliessende Verätherung der Hydroxygruppe mit einem 1-Bromalkan in Aethanol in Gegenwart von Kaliumcarbonat und Natriumjodid erhalten werden.

Die Verbindungen der Formel XII, worin m = 1 ist und X p-Alkoxyphenyl und Y Dialkylamino bedeuten, können ebenfalls ausgehend von 4-Amino-4'-hydroxybiphenyl durch Ueberführung in das Diazoniumsalz mit Natriumnitrit und Salzsäure, anschliessende Umsetzung mit N,N-Dialkylanilin und dann Verätherung der Hydroxygruppe mit einem 1-Bromalkan in Aethanol in Gegenwart von Kaliumcarbonat hergestellt werden.

Zur Herstellung der Verbindungen der Formel XII, worin m = 2 ist und X p-Alkoxyphenyl und Y Nitro bedeuten, kann beispielsweise 4-Amino-4'-hydroxybiphenyl mit 4-Nitro-nitrosobenzol umgesetzt, die Hydroxygruppe mit einem 1-Bromalkan in Aethanol in Gegenwart von Kaliumcarbonat und Natriumjodid veräthert, die Nitrogruppe mit Natriumhydrogensulfid in Aethanol zur Aminogruppe reduziert und schliesslich die erhaltene Verbindung mit 4-Nitro-nitrosobenzol umgesetzt werden.

Die Herstellung einer Verbindung der Formel XII, worin m = 2 ist und X p-Alkoxyphenyl und Y Dialkylamino bedeuten, kann beispielsweise ausgehend von der entsprechenden (oben beschriebenen) Verbindung der Formel XII, worin X p-Alkoxyphenyl, Y Nitro und m die Zahl 1 bezeichnen, durch Reduktion der Nitrogruppe mit Natriumhydrogensulfid, Ueberführung in das Diazoniumsalz mit Natriumnitrit und Salzsäure und Umsetzung mit N,N-Dialkylanilin erfolgen.

Die Verbindungen der Formel XII, worin m = 1 ist und X Alkoxy und Y p-Nitrophenyl bedeuten, können beispielsweise durch Diazotieren von 4-Nitro-4'-aminobiphenyl (bekannt aus J. Chem. Soc. 1931, 1361) mit Natriumnitrit und Salzsäure, Kuppeln mit Phenol und Veräthern der Hydroxygruppe mit einem 1-Bromalkan in Aethanol in Gegenwart von Kaliumcarbonat und Natriumjodid erhalten werden.

Zur Herstellung einer Verbindung der Formel XII, worin m = 2 ist und X Alkoxy und Y p-Nitrophenyl bedeuten, kann beispielsweise 4-Nitro-4'-aminobiphenyl mit 4-Nitro-nitrosobenzol umgesetzt, die erhaltene Verbindung mit Natriumhydrogensulfid in Aethanol (nach Houben-Weyl XI/1, 418) partiell reduziert (zu 4-Amino-4'-(p-Nitrophenyl)azobenzol), dann mit Natriumnitrit und Salzsäure diazotiert, mit Phenol gekuppelt und mit einem 1-Bromalkan in Aethanol in Gegenwart von Kaliumcarbonat und Natriumjodid veräthert werden.

Die Verbindungen der Formel XII, worin m 1 oder 2 ist und X Alkoxy und Y p-(Dialkylamino)phenyl bedeuten, können beispielsweise aus den entsprechenden, in den beiden vorangehenden Abschnitten beschriebenen Nitroverbindungen erhalten werden, indem zuerst die Nitrogruppe mit Natriumhydrogensulfid in Aethanol reduziert und anschliessend die Aminogruppe z.B. mit einem Aldehyd ($C_1$-$C_4$-Alkanal) in Ameisensäure oder mit Alkyljodid oder -sulfat alkyliert wird.

Die Herstellung der Farbstoffe der Formel VI kann beispielsweise nach der von R.J. Lahoti et al. in Indian J. Chem. Sect. B 11 [1978] 1041 angegebenen Methode erfolgen.

Von den Verbindungen der Formel XII sind diejenigen mit 3 Benzolringen bevorzugt. Ferner sind diejenigen Verbindungen der Formel XII bevorzugt, worin Alkoxy geradkettige Reste mit 3 bis 9, insbesondere 5 bis 7 Kohlenstoffatomen und Alkyl in den Dialkylaminogruppen Methyl oder Aethyl, insbesondere Methyl bedeuten.

Beispiele bevorzugter Verbindungen der Formel XII sind diejenigen, worin m, X und Y die folgenden Bedeutungen haben ($\varepsilon_\lambda$ = molare Extinktion in Aethanol bei Wellenlänge $\lambda$ [nm]):

m = 1, X = Methoxy, Y = Nitro: $\varepsilon_{373}$ = 25990

m = 1, X = Butyloxy, Y = Nitro: $\varepsilon_{375}$ = 28135

m = 1, X = Heptyloxy, Y = Nitro: Smp. 82,3-83,2°C, Klp. 96,4°C, Umwandlung smektisch-nematisch 93,7°C, $\varepsilon_{378}$ = 27140

m = 1, X = p-Heptyloxyphenyl, Y = Nitro, Smp. 146,9-148,2°C, Klp. 257,7-258,1°C, Umwandlung smektisch-nematisch 238,2°C, $\varepsilon_{390}$ = 28180

m = 1, X = p-Heptyloxyphenyl, Y = Dimethylamino: Smp. 171,6-173,9°C, Klp. 246,7-247,3°C, $\varepsilon_{421}$ = 37190

m = 1, X = Heptyloxy, Y = p-Nitrophenyl

m = 1, X = Heptyloxy, Y = p-(Dimethylamino)phenyl

m = 2, X = Butyloxy, Y = Butyloxy: $\varepsilon_{388}$ = 41865

m = 2, X = Butyloxy, Y = Heptyloxy: $\varepsilon_{392}$ = 47625

m = 2, X = Heptyloxy, Y = Heptyloxy

m = 2, X = Heptyloxy, Y = Nitro: Smp. 165,6-166,7°C, Klp. >300°C (Zersetzung, smektisch), $\varepsilon_{395}$ = 42160

m = 2, X = Heptyloxy, Y = Dimthylamino: Smp. 154,8-156,9°C, Klp. 268,2-270,0°C (nematisch), $\varepsilon_{474}$ = 41240

m = 2, X = Dimethylamino, Y = Dimethylamino: Smp. 288,0°C (Zersetzung), Klp. >300°C, $\varepsilon_{500}$ = 53360

m = 2, X = p-Heptyloxyphenyl, Y = Nitro

m = 2, X = p-Heptyloxyphenyl, Y = Dimethylamino: Smp. 201,3-203,0°C, Klp. >300°C (Zersetzung), $\varepsilon_{480}$ = 40970

m = 2, X = Heptyloxy, Y = p-Nitrophenyl

m = 2, X = Heptyloxy, Y = p-(Dimethylamino)phenyl.

Die Verbindungen der Formel IV sind bekannt.

Die übrigen Verbindungen der Formel XII, d.h. die Verbindungen der allgemeinen Formel

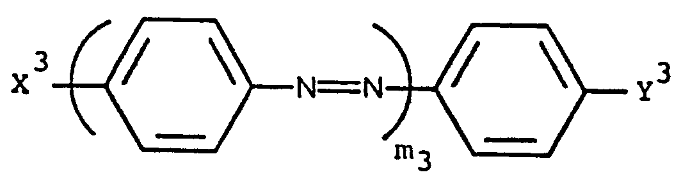 XV

worin $m_3$ für die Zahlen 1 oder 2 steht, und $X^3$ p-Alkoxyphenyl und $Y^3$ Nitro oder Dialkylamino bezeichnen, oder $X^3$ Alkoxy und $Y^3$ p-Nitrophenyl oder p-(Dialkylamino)phenyl darstellen; oder $m_3$ für die Zahl 2 steht, und $X^3$ Alkoxy und $Y^3$ Alkoxy, Nitro oder Dialkylamino bedeuten, oder beide Reste $X^3$ und $Y^3$ Dialkylaminogruppen darstellen; und Alkoxy geradkettige Reste mit 1 bis 12 Kohlenstoffatomen und Alkyl in den

Dialkylaminogruppen geradkettige Reste mit 1 bis 4 Kohlenstoffatomen umfassen,

sind neu und bilden ebenfalls Gegenstand der vorliegenden Erfindung.

Die optimalen Farbstoffkonzentrationen hängen unter anderem von der Dicke der verwendeten Flüssigkristallzelle ab. Zweckmässigerwweise liegen sie jedoch innerhalb der oben angegebenen Grenzen. Bevorzugt ist eine Gesamtkonzentration an Verbindungen der Formeln VI und XII von etwa 0,3 bis etwa 10 Gew.-%, besonders bevorzugt etwa 0,3 bis etwa 5 Gew.-%. Das Mengenverhältnis bei Verwendung mehrerer Farbstoffe wird hauptsächlich durch die gewünschte Farbe der Mischung und das Spektrum der einzelnen Farbkomponenten bestimmt. Der Farbstoffgehalt schwarzer Mischungen setzt sich zweckmässigerweise aus etwa 0,3 bis etwa 1,4 Gewichtsteilen an Verbindungen der Formel XIII, etwa 0,4 bis etwa 1,4 Gewichtsteilen an Verbindungen der Formel XIV und etwa 1,0 bis etwa 2,2 Gewichtsteilen an Verbindungen der Formel VI zusammen. Das bevorzugte Mengenverhältnis schwarzer Mischungen beträgt etwa 0,8 bis etwa 1,2 Gewichtsteile an Verbindungen der Formel XIII, etwa 0,75 bis etwa 1,15 Gewichtsteile an Verbindungen der Formel XIV und etwa 1,4 bis etwa 2,2 Gewichtsteile an Verbindungen der Formel VI, insbesondere wenn die verwendeten Verbindungen der Formeln XIII und XIV Farbstoffe der Formeln IV bzw. III sind.

Die Verbindungen der Formeln I und II sind bekannte Verbindungen und in Z. Naturforsch. 34b, 1535-1541 (1979) bzw. in der Deutschen Auslegeschrift No. 24 29 093 beschrieben.

Die erfindungsgemässen Mischungen können neben den Verbindungen der Formeln I-IV und VI weitere nematische und/oder nicht-nematische Substanzen enthalten. Bevorzugte weitere Mischungskomponenten sind:

bis zu etwa 50 Gew.-% 4-Cyanobiphenyle der allgemeinen Formel

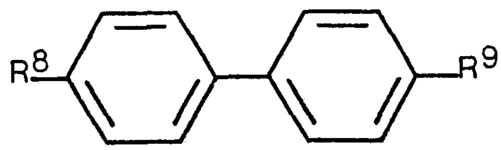

VII

worin $R^8$ eine geradkettige Alkyl- oder Alkoxygruppe mit 2 bis 8 Kohlenstoffatomen und $R^9$ die Cyanogruppe bedeutet,

und/oder bis zu etwa 30 Gew.-%, vorzugsweise bis zu etwa 20 Gew.-% p-(5-Alkyl-2-pyrimidinyl)-benzonitrile der allgemeinen Formel

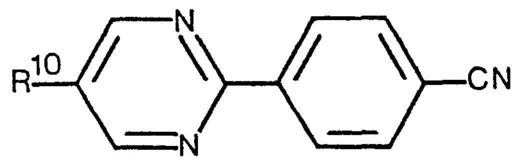

VIII

worin $R^{10}$ eine geradkettige Alkylgruppe mit 2 bis 7 Kohlenstoffatomen bedeutet,

und/oder bis zu etwa 10 Gew.-% 4"-Alkyl-4-cyano-p-terphenyle der Formel

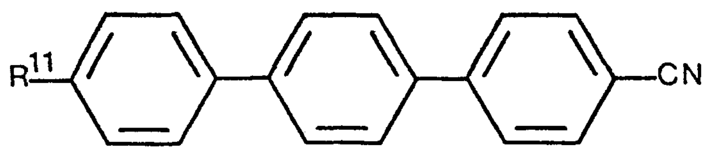

IX

worin $R^{11}$ eine geradkettige Alkylgruppe mit 3 bis 7 Kohlenstoffatomen bedeutet,

und/oder bis zu etwa 15 Gew.-% p-Alkylbenzoesäure-p'-cyanophenylester der allgemeinen Formel

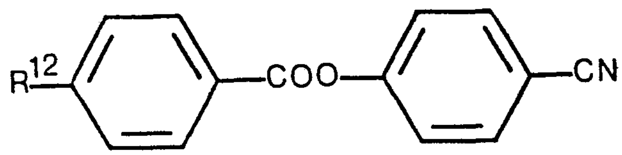

X

worin $R^{12}$ eine geradkettige Alkylgruppe mit 2 bis 7 Kohlenstoffatomen bedeutet,

und/oder bis zu etwa 12 Gew.-% 2-(4-Cyanophenyl)-5-(4-alkylphenyl)pyrimidine der allgemeinen Formel

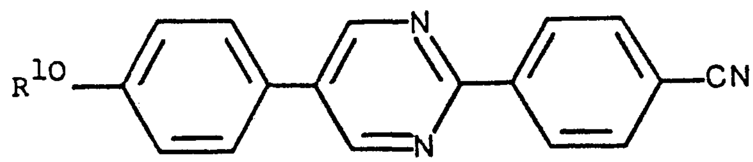

XVI

worin $R^{10}$ eine geradkettige Alkylgruppe mit 2 bis 7 Kohlenstoffatomen bedeutet.

Die Verbindungen der Formeln VII-X und XVI sind bekannte Verbindungen. Als bevorzugte Beispiele von Verbindungen der Formeln I, II, VII-X und XVI können folgende genannt werden:

trans-p-[5-(4-Aethylcyclohexyl)-2-pyrimidinyl]benzonitril,

trans-p-[5-(4-Propylcyclohexyl)-2-pyrimidinyl]benzonitril,

trans-p-[5-(4-Butylcyclohexyl)-2-pyrimidinyl]benzonitril,

trans-p-[5-(4-Pentylcyclohexyl)-2-pyrimidinyl]benzonitril,

trans-p-[5-(4-Heptylcyclohexyl)-2-pyrimidinyl]benzonitril,

trans-4-Propylcyclohexancarbonsäure-p-cyanophenylester,

trans-4-Butylcyclohexancarbonsäure-p-cyanophenylester,

trans-4-Pentylcyclohexancarbonsäure-p-cyanophenylester,

trans-4-Butylcyclohexancarbonsäure-p-(äthoxy)phenylester,

trans-4-Butylcyclohexancarbonsäure-p-(hexyloxy)phenylester,

trans-4-Pentylcyclohexancarbonsäure-p-(methoxy)phenylester,

trans-4-Pentylcyclohexancarbonsäure-p-(propyloxy)-phenylester,

4'-Pentyl-4-cyanobiphenyl,

4'-Heptyl-4-cyanobiphenyl,

4'-Pentyloxy-4-cyanobiphenyl,

4'-Octyloxy-4-cyanobiphenyl,

p-(5-Pentyl-2-pyrimidinyl)benzonitril,

p-(5-Heptyl-2-pyrimidinyl)benzonitril,

4"-Pentyl-4-cyano-p-terphenyl,

p-Butylbenzoesäure-p'-cyanophenylester,

p-Pentylbenzoesäure-p'-cyanophenylester,

2-(4-Cyanophenyl)-5-(4-propylphenyl)pyrimidin,

2-(4-Cyanophenyl)-5-(4-butylphenyl)pyrimidin.

Der bevorzugte Konzentrationsbereich beträgt für die Verbindungen der Formel I etwa 10 bis etwa 30 Gew.-% und für die Verbindungen der Formel II etwa 20 bis etwa 50 Gew.-%.

Die erfindungsgemässen Mischungen können ferner einen geeigneten optisch aktiven Zusatz enthalten. Solche Zusätze erzeugen in der Flüssigkristallmischung (in Abwesenheit eines äusseren Feldes) eine Helix-Struktur und erhöhen die Extinktion. Grundsätzlich eignen sich dazu irgendwelche - auch nichtflüssigkristalline - stabile, nicht-ionisierende, optisch aktive organische Verbindungen. Vorzugsweise werden jedoch optisch aktive Verbindungen der allgemeinen Formel

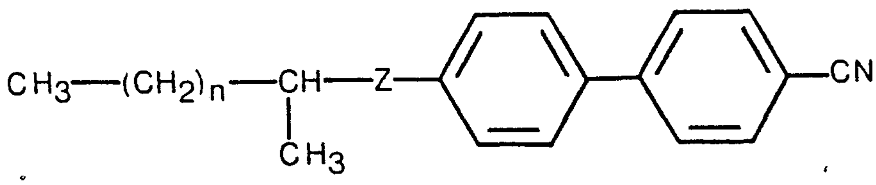

XI

worin Z die Gruppe $-CH_2-$ oder $-CH_2O-$ und n eine ganze Zahl von 1 bis 4 bedeuten,

verwendet. Die optimale Konzentration der optisch aktiven

Verbindungen hängt hauptsächlich von der Art der Verbindung, von der gewünschten Ganghöhe (pitch) der Mischung und der Dicke der verwendeten elektro-optischen Zelle ab.

Im allgemeinen können die erfindungsgemässen Mischungen 0 bis etwa 4 Gew.-% optisch aktive Verbindungen enthalten. Bei Verwendung von Verbindungen der Formel XI als optisch aktiver Zusatz in Displays mit 10 µm Zellendicke ist beispielsweise eine Menge von etwa 2,5 bis etwa 4,0 Gew.-% bevorzugt.

Bevorzugte Verbindungen der Formel XI sind:

(+)-4'-(2-Methylbutyl)-4-cyanobiphenyl,
(+)-4'-(2-Methylbutyloxy)-4-cyanobiphenyl
und deren optische Antipoden.

Die Herstellung der erfindungsgemässen Mischungen kann in an sich bekannter Weise erfolgen, z.B. durch Erhitzen eines Gemisches der Komponenten auf eine Temperatur knapp oberhalb des Klärpunktes und anschliessendes Abkühlen.

Die Herstellung einer elektro-optischen Vorrichtung enthaltend eine erfindungsgemässe Mischung kann ebenfalls in an sich bekannter Weise erfolgen, z.B. durch Evakuieren einer geeigneten Zelle und Einbringen der Mischung in die evakuierte Zelle.

Die Erfindung betrifft ferner alle neuen Verbindungen, Mischungen, Verfahren, Verwendungen und Vorichtungen wie hierin beschrieben.

Beispiele für besonders bevorzugte, nematische bzw. cholesterische Mischungen sind die folgenden Mischungsbeispiele 1-11, wobei jeweils eine der Basismischungen A-C als Flüssigkristallmatrix verwendet wurde. S bezeichnet den Ordnungsgrad, $\lambda_{max}$ die Wellenlänge des Absorptionsmaximums

(in der Mischung gemessen) und $\varepsilon_{max}$ die zugehörige molare isotrope Extinktion des Farbstoffes (in Aethanol). $t_{70}$ bedeutet die Zeit, in der die Extinktion auf 70% der Anfangsextinktion fällt bei Bestrahlung mit einer Xenon-Lampe von 1,1 kW aus 22 cm Abstand. Mischungsbeispiel 5 gibt die entsprechenden Werte für einen blauen Farbstoff der Formel VI.

Basismischung A

8,03 Gew.-% trans-p-[5-(4-Aethylcyclohexyl)-2-pyrimidinyl]benzonitril,

5,74 Gew.-% trans-p-[5-(4-Pentylcyclohexyl)-2-pyrimidinyl]benzonitril,

14,94 Gew.-% trans-p-[5-(4-Heptylcyclohexyl)-2-pyrimidinyl]benzonitril,

7,94 Gew.-% trans-4-Propylcyclohexancarbonsäure-p-cyanophenylester,

7,22 Gew.-% trans-4-Pentylcyclohexancarbonsäure-p-cyanophenylester,

14,68 Gew.-% trans-4-Butylcyclohexancarbonsäure-p-(äthoxy)phenylester,

13,11 Gew.-% trans-4-Pentylcyclohexancarbonsäure-p-(methoxy)phenylester,

28,34 Gew.-% 4'-Pentyl-4-cyanobiphenyl,

Smp. <-20°C; Klp. 97,2-98,2°C; nematisch.

Basismischung B

11,98 Gew.-% trans-p-[5-(4-Aethylcyclohexyl)-2-pyrimidinyl]benzonitril,

9,14 Gew.-% trans-p-[5-(4-Pentylcyclohexyl)-2-pyrimidinyl]benzonitril,

22,94 Gew.-% trans-4-Butylcyclohexancarbonsäure-p-(äthoxy)phenylester,

24,71 Gew.-% 4'-Heptyl-4-cyanobiphenyl,

6,02 Gew.-% p-(5-Pentyl-2-pyrimidinyl)benzonitril,

13,40 Gew.-% p-(5-Heptyl-2-pyrimidinyl)benzonitril,

11,81 Gew.-% 2-(4-Cyanophenyl)-5-(4-butylphenyl)-pyrimidin,

Smp. <-20°C; Klp. 101°C; nematisch.

Basismischung C

12,52 Gew.-% trans-p-[5-(4-Aethylcyclohexyl)-2-pyrimidinyl]benzonitril,

16,50 Gew.-% trans-p-[5-(4-Heptylcyclohexyl)-2-pyrimidinyl]benzonitril,

15,54 Gew.-% trans-4-Propylcyclohexancarbonsäure-p-cyanophenylester,

9,71 Gew.-% trans-4-Butylcyclohexancarbonsäure-p-cyanophenylester,

15,54 Gew.-% tans-4-Pentylcyclohexancarbonsäure-p-cyanophenylester,

7,19 Gew.-% p-(5-Pentyl-2-pyrimidinyl)benzonitril,

15,00 Gew.-% p-(5-Heptyl-2-pyrimidinyl)benzonitril,

8,00 Gew.-% p-Butylbenzoesäure-p'-cyanophenylester,

Smp. <-20°C; Klp. 101°C; nematisch.

Mischungsbeispiel 1

7,73 Gew.-% trans-p-[5-(4-Aethylcyclohexyl)-2-pyrimidinyl]benzonitril,

5,52 Gew.-% trans-p-[5-(4-Pentylcyclohexyl)-2-pyrimidinyl]benzonitril,

14,38 Gew.-% trans-p-[5-(4-Heptylcyclohexyl)-2-pyrimidinyl]benzonitril,

7,64 Gew.-% trans-4-Propylcyclohexancarbonsäure-p-cyanophenylester,

6,95 Gew.-% trans-4-Pentylcyclohexancarbonsäure-p-cyanophenylester,

14,13 Gew.-% trans-4-Butylcyclohexancarbonsäure-p-(äthoxy)phenylester,

12,62 Gew.-% trans-4-Pentylcyclohexancarbonsäure-p-(methoxy)phenylester,

27,28 Gew.-% 4'-Pentyl-4-cyanobiphenyl,

0,95 Gew.-% Farbstoff der Formel III, worin $R^4$ Heptyl bedeutet,

1,00 Gew.-% Farbstoff der Formel IV, worin $R^5$ Methyl bedeutet,

1,80 Gew.-% Farbstoff der Formel VI, worin $R^7$ Heptyl bedeutet,
Smp. $< -20°C$; Klp. 99,7-101,7°C; schwarz

## Mischungsbeispiel 2

Basismischung A + 1,5 Gew.-% Farbstoff der Formel III, worin $R^4$ Heptyl bedeutet; rot; S = 0,80; $\lambda_{max}$ = 484 nm, $\varepsilon_{max} = 4{,}12 \cdot 10^4$; $t_{70} > 700$ h.

## Mischungsbeispiel 3

Basismischung A + 7 Gew.-% Farbstoff der Formel IV, worin $R^5$ Methyl bedeutet; gelb; S = 0,66; $\lambda_{max}$ = 383 nm, $\varepsilon_{max} = 2{,}6 \cdot 10^4$; $t_{70} > 900$ h.

## Mischungsbeispiel 4

Basismischung A + 10 Gew.-% Farbstoff der Formel IV, worin $R^5$ Heptyl bedeutet; gelb; S = 0,71; $\lambda_{max}$ = 383 nm, $\varepsilon_{max} = 2{,}6 \cdot 10^4$; $t_{70} > 900$ h.

## Mischungsbeispiel 5

Basismischung A + 1,5 Gew.-% Farbstoff der Formel VI, worin $R^7$ Heptyl bedeutet; blau; S = 0,72; $\lambda_{max}$ = 599 nm, $\varepsilon_{max} = 2{,}5 \cdot 10^4$; $\lambda_{max}$ = 643 nm, $\varepsilon_{max} = 3{,}02 \cdot 10^4$; Smp. $< -20°C$; Klp. 97,5-99,6°C; $t_{70} > 1000$ h.

## Mischungsbeispiel 6

Basismischung A + 0,5 Gew.-% Farbstoff der Formel XII, worin m die Zahl 2 und X und Y Dimethylaminogruppen bedeuten; rot; S = 0,77; $\lambda_{max}$ = 507 nm, $\varepsilon_{max} = 4{,}31 \cdot 10^4$; $t_{70} > 200$ h.

Mischungsbeispiel 7

Basismischung A + 0,7 Gew.-% Farbstoff der Formel XII, worin m die Zahl 2, X Butyloxy und Y Heptyloxy bedeuten; gelb; S = 0,80; $\lambda_{max}$ = 402 nm, $\varepsilon_{max}$ = 4,67 · $10^4$; $t_{70}$ = 610 h.

Mischungsbeispiel 8

Basismischung A + 4 Gew.-% Farbstoff der Formel XII, worin m die Zahl 1, X p-Heptyloxyphenyl und Y Nitro bedeuten; gelb; S ≐ 0,78; $\lambda_{max}$ = 406 nm, $\varepsilon_{max}$ ≐ 2,82 · $10^4$: $t_{70}$ >600 h.

Mischungsbeispiel 9

Basismischung A +

0,7 Gew.-% Farbstoff der Formel XII, worin m die Zahl 1, X p-Heptyloxyphenyl und Y Nitro bedeuten,

1,3 Gew.-% Farbstoff der Formel III, worin $R^4$ Heptyl bedeutet,

0,1 Gew.-% Farbstoff der Formel XII, worin m die Zahl 2 und X und Y Dimethylaminogruppen bedeuten,

1,7 Gew.-% Farbstoff der Formel VI, worin $R^7$ Heptyl bedeutet,

3,6 Gew.-% (+)- oder (-)-4'-(2-Methylbutyl)-4-cyanobiphenyl;

schwarz; für Display mit 10 µm Zellendicke geeignet (cholesterisch).

Mischungsbeispiel 10

Basismischung B + 1,3 Gew.-% Farbstoff der Formel III, worin $R^4$ Heptyl bedeutet; rot; S = 0,81, $\lambda_{max}$ = 484 nm, $\varepsilon_{max}$ = 4,12 · $10^4$; $t_{70}$ >700 h.

Mischungsbeispiel 11

Basismischung C + 0,3 Gew.-% Farbstoff der Formel XII, worin m die Zahl 1, X p-Heptyloxyphenyl und Y Nitro bedeuten; gelb; S = 0,78; $\lambda_{max}$ = 406 nm, $\varepsilon_{max}$ = 2,82 · $10^4$; $t_{70}$ >600 h.

Die Herstellung der erfindungsgemässen Verbindungen der Formel XII wird anhand der folgenden Beispiele veranschaulicht.

Beispiel 1

Ein Gemisch von 3,1 g 4-Nitro-4'-hydroxy-azobenzol, 15 mg Natriumjodid, 2,27 g 1-Brom-heptan, 1,8 g Kaliumcarbonat und 20 ml Aethanol wird während 60 Stunden unter Rückfluss erhitzt. Man entfernt das Lösungsmittel im Vakuum, setzt Wasser zu und extrahiert erschöpfend mit Methylenchlorid. Der nach dem Trocknen mit Natriumsulfat und Abdampfen des Lösungsmittels verbleibende Rückstand von 4,0 g (braune Kristalle) 4-Nitro-4'-heptyloxy-azobenzol wird an einer Säule von 200 g Kieselgel mit Methylenchlorid chromatographiert. Durch Umkristallisation der einheitlichen Fraktionen aus Aceton-Hexan erhält man die reine Verbindung als orange Kristalle; Smp. 82,3-83,2°C, flüssigkristallin, Umwandlung bei 93,7°C, Klp. 96,4°C.

Beispiel 2

Ein Gemisch von 6,2 g [N,N-Dimethyl-anilin]-(4 azo 1)-benzol-(4 azo 4)-phenol, 20 mg Natriumjodid, 3,2 g 1-Brom-heptan, 2,5 g Kaliumcarbonat und 20 ml Aethanol wird unter Rühren während 22 Stunden unter Rückfluss erhitzt. Man entfernt das Lösungsmittel im Vakuum, setzt Wasser zu und extrahiert erschöpfend mit Methylenchlorid. Der nach dem Trocknen mit Natriumsulfat und Abdampfen des Lösungsmittels verbleibende Rückstand von 7,2 g (rotbraune Kristalle) von [N,N-Dimethyl-anilin]-(4 azo 1)-benzol-(4 azo 4)-phenol-heptyläther wird an einer Säule von 350 g Kieselgel chromatographiert. Hexan-Toluol 1:1, Toluol und Toluol-1% Aceton dienen als Eluierungsmittel. Durch Umkristallisation der einheitlichen Fraktionen aus Methylenchlorid-Isopropanol erhält man die reine Verbindung als rotbraune Kristalle; Smp. 154,8-156,9°C, flüssigkristallin, Klp. 268,2-270,0°C.

## Beispiel 3

0,35 g 4-Nitro-nitrosobenzol wurden in 10 ml warmem Eisessig gelöst und in einem Oelbad von 70°C erwärmt. Anschliessend wurde eine auf 110°C erhitzt Lösung von 0,45 g 4-Amino-4'-hydroxybiphenyl zugegeben und noch 30 Minuten bei 70°C gehalten. Nach dem Abkühlen auf Raumtemperatur wurde die erhaltene Suspension mit dreimal 300 ml Methylenchlorid extrahiert und der Extrakt nacheinander mit 200 ml Wasser, 200 ml 10%-iger Natriumbicarbonatlösung und 200 ml Wasser gewaschen, über Natriumsulfat getrocknet und im Vakuum eingedampft. Es wurden 0,6 g orange Kristalle von 4-Nitro-4'-(4-hydroxyphenyl)azobenzol erhalten.

0,6 g 4-Nitro-4'-(4-hydroxyphenyl)azobenzol wurden in 40 ml Aethanol heiss suspendiert, in einen Sulfierkolben gegeben, und mit 10 ml Aethanol nachgespült.Dann wurde 0,336 g 1-Bromheptan, 0,260 g Kaliumcarbonat und eine Spatelspitze Natriumjodid zugegeben und die dunkelbraune Suspension 16 Stunden unter Rückfluss gerührt. Da immer noch Ausgangssubstanz vorhanden war, wurde nochmals 0,342 g 1-Bromheptan und 0,260 g Kaliumcarbonat zugesetzt und weitere 4 Stunden unter Rückfluss gekocht. Anschliessend wurde das Reaktionsgemisch im Vakuum zur Trockene eingeengt, in 30 ml Toluol suspendiert und auf Kieselgel mit 1,0 l Toluol und 0,8 l Toluol/Aceton (2%) chromatographiert. Dabei wurden 0,276 g 4-Nitro-4'-(4-heptyloxyphenyl)azobenzol erhalten, welche aus Methylenchlorid/Hexan umkristallisiert wurden: Smp. 146,9-148,2°C; Klp. 257,7-258,1°C; Umwandlung smektisch-nematisch 238,2°C; $\varepsilon_{252}$ = 15480, $\varepsilon_{294}$ = 13830, $\varepsilon_{390}$ = 28180.

## Beispiel 4

835 mg 4-Nitro-4'-(4-heptyloxyphenyl)azobenzol (hergestellt nach Beispiel 3) wurden in 7 ml Aethanol suspendiert und unter Rühren zu leichtem Rückfluss (78°C) erwärmt. Dann wurden innert 35 Minuten 6,2 ml einer 25%-igen Natriumhydrogensulfid-Lösung zugetropft und die Suspension noch 1 Stunde unter Rühren am Rückfluss gekocht. Nach dem Abkühlen auf Raumtemperatur wurden 13 ml Wasser zugesetzt, genutscht, mit 5 ml Wasser/Aethanol (3:1) nachgewaschen und im Vakuum bei 50°C über Kaliumhydroxid getrocknet. Dabei wurden 787 mg graue Kristalle von 4-Amino-4'-(4-heptyloxyphenyl)azobenzol erhalten.

Zu einer Suspension von 787 mg 4-Amino-4'-(4-heptyloxyphenyl)azobenzol in 2 ml Salzsäure/Wasser (1:1) wurden ca. 3 g Eis zugegeben. Unter zusätzlicher Kühlung mit einem Eisbad wurden unter Rühren 146 mg Natriumnitrit (Reinheit 90%) in fester Form zugesetzt und noch 30 Minuten weitergerührt. Anschliessend wurde genutscht, mit wenig Wasser nachgewaschen und im Vakuum über Kaliumhydroxid getrocknet. Dabei wurden 778 mg dunkelbraune Kristalle des Diazoniumsalzes von 4-Amino-4'-(4-heptyloxyphenyl)azobenzol erhalten.

242 mg Dimethylanilin, 10 ml Eisessig und 5 ml Wasser wurden in einen Sulfierkolben gegeben und unter Rühren auf 3°C gekühlt. Anschliessend wurden 778 mg des Diazoniumsalzes von 4-Amino-4'-(4-heptyloxyphenyl)azobenzol zugegeben und das dunkelbraune Reaktionsgemisch 30 Minuten bei 3°C weitergerührt. Dann wurden 0,6 g Natriumacetat zugesetzt und noch weitere 30 Minuten bei 3°C und danach 1,5 Stunden bei Raumtemperatur gerührt. Das Reaktionsgemisch wurde genutscht, mit wenig Wasser nachgewaschen und der Rückstand im Vakuum über Kaliumhydroxid getrocknet. Es wurden 753 mg schwarze Kristalle von 4-(Dimethylamino)-4'-(4'-heptyloxy-4-biphenylylazo)azobenzol erhalten, die zur Reinigung an Kieselgel mit Toluol chromatographiert und dann aus Methylenchlorid/Isopropanol umkristallisiert wurden: Smp. 201,3-203,0°C; Klp. $>$ 300°C (Zersetzung; $\varepsilon_{246}$ = 19060, $\varepsilon_{480}$ = 40970.

Patentansprüche

1. Farbstoffhaltige Flüssigkristallmischung enthaltend etwa 5 bis etwa 40 Gew.-% trans-p-[5-(4-Alkylcyclohexyl)-2-pyrimidinyl]benzonitrile der allgemeinen Formel

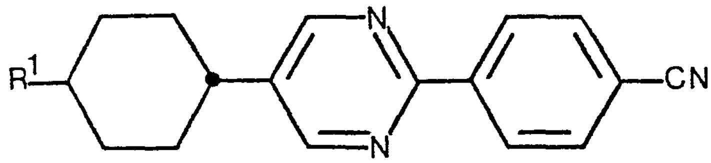

I

worin $R^1$ eine geradkettige Alkylgruppe mit 2 bis 7 Kohlenstoffatomen bedeutet,

etwa 10 bis etwa 60 Gew.-% trans-4-Alkylcyclohexancarbonsäure-phenylester der allgemeinen Formel

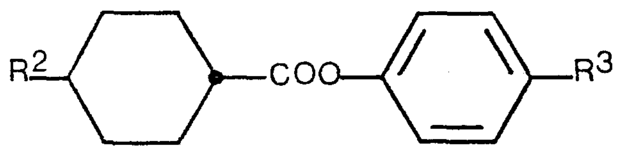

II

worin $R^2$ eine geradkettige Alkylgruppe mit 2 bis 6 Kohlenstoffatomen und $R^3$ die Cyanogruppe oder eine geradkettige Alkoxygruppe mit 1 bis 6 Kohlenstoffatomen bedeutet,

und etwa 0,1 bis etwa 15 Gew.-% eines oder mehrerer Farbstoffe der allgemeinen Formel

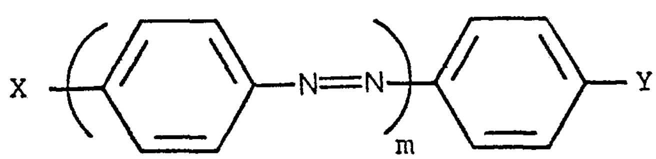

XII

worin m für die Zahl 1 steht und X Alkoxy und Y Nitro bedeuten; oder m für die Zahlen 1 oder 2 steht, und X p-Alkoxyphenyl und Y Nitro oder Dialkylamino bezeichnen, oder X Alkoxy und Y p-Nitrophenyl oder p-(Dialkylamino)phenyl darstellen; oder m für die Zahl 2 steht, und X Alkoxy und Y Alkoxy, Nitro oder Dialkylamino bedeuten, oder beide Reste X und Y

Dialkylaminogruppen darstellen; und Alkoxy geradkettige Reste mit 1 bis 12 Kohlenstoffatomen und Alkyl in den Dialkylaminogruppen geradkettige Reste mit 1 bis 4 Kohlenstoffatomen umfassen.

2. Farbstoffhaltige Flüssigkristallmischung nach Anspruch 1, dadurch gekennzeichnet, dass sie etwa 0,1 bis etwa 10 Gew.-% eines oder mehrerer Farbstoffe der allgemeinen Formel

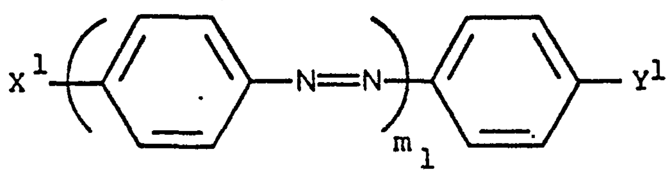

XIII

worin $m_1$ für die Zahl 1 steht, und $X^1$ Alkoxy und $Y^1$ Nitro, p-Nitrophenyl oder p-(Dialkylamino)phenyl bedeuten, oder $X^1$ p-Alkoxyphenyl und $Y^1$ Nitro oder Dialkylamino bezeichnen; oder $m_1$ für die Zahl 2 steht, und $X^1$ p-Alkoxyphenyl und $Y^1$ Nitro bedeuten, oder $X^1$ Alkoxy und $Y^1$ p-Nitrophenyl, Alkoxy oder Nitro darstellen; und Alkoxy geradkettige Reste mit 1 bis 12 Kohlenstoffatomen und Alkyl in den Dialkylaminogruppen geradkettige Reste mit 1 bis 4 Kohlenstoffatomen umfassen,

enthält.

3. Farbstoffhaltige Flüssigkristallmischung nach Anspruch 1, dadurch gekennzeichnet, dass sie etwa 0,1 bis etwa 5 Gew.-% eines oder mehrerer Farbstoffe der allgemeinen Formel

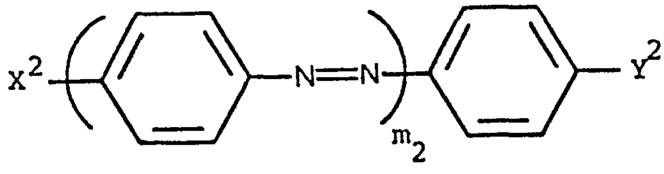

XIV

worin $m_2$ für die Zahl 2 steht, und $X^2$ p-Alkoxyphenyl und $Y^2$ Dialkylamino bedeuten, oder $X^2$ Alkoxy und $Y^2$ p-(Dialkylamino)phenyl oder Dialkylamino bezeichnen, oder beide Reste $X^2$ und $Y^2$ Dialkylaminogruppen dar-

stellen; und Alkoxy geradkettige Reste mit 1 bis 12 Kohlenstoffatomen und Alkyl in den Dialkylaminogruppen geradkettige Reste mit 1 bis 4 Kohlenstoffatomen umfassen,

enthält.

4. Farbstoffhaltige Flüssigkristallmischung nach einem der Ansprüche 1 bis 3, dadurch gekennzeichnet, dass in den Verbindungen der Formeln XII-XIV Alkoxy geradkettige Reste mit 3 bis 9, vorzugsweise 5 bis 7 Kohlenstoffatomen und Alkyl in den Dialkylaminogruppen Methyl oder Aethyl, vorzugsweise Methyl bedeuten.

5. Farbstoffhaltige Flüssigkristallmischung nach einem der Ansprüche 1 bis 3, dadurch gekennzeichnet, dass sie als Farbstoffe der Formel XII eine oder mehrere Verbindungen der folgenden allgemeinen Formeln

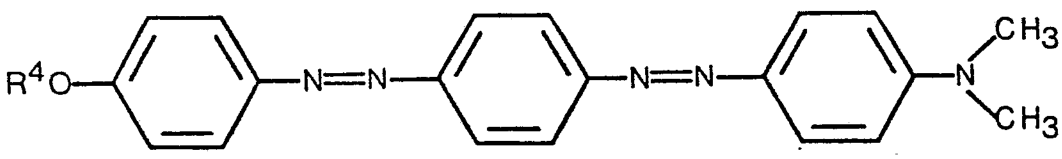

III

worin $R^4$ eine geradkettige Alkylgruppe mit 1 bis 9 Kohlenstoffatomen bedeutet,

und/oder

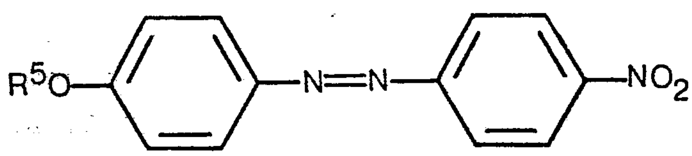

IV

worin $R^5$ eine geradkettige Alkylgruppe mit 1 bis 9 Kohlenstoffatomen bedeutet,

enthalten, wobei die Verbindungen der Formel III in einer Menge von 0 bis etwa 3 Gew.-% und die Verbindungen der Formel IV in einer Menge von 0 bis etwa 10 Gew.-% vorliegen, und die Menge der Farbstoffe der Formeln III und IV insgesamt mindestens etwa 0,3 Gew.-% beträgt.

6. Farbstoffhaltige Flüssigkristallmischung nach einem der Ansprüche 1 bis 5, dadurch gekennzeichnet, dass sie zusätzlich einen oder mehrere Farbstoffe der allgemeinen Formel

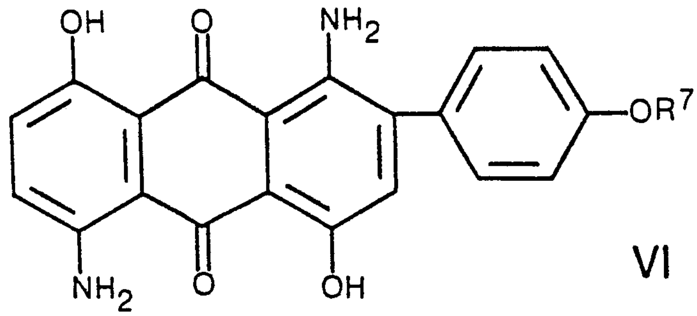

VI

worin $R^7$ eine geradkettige Alkylgruppe mit 5 bis 8 Kohlenstoffatomen bedeutet,

in einer Menge von etwa 0,1 bis etwa 5 Gew.-% enthält.

7. Farbstoffhaltige Flüssigkristallmischung nach Anspruch 6, dadurch gekennzeichnet, dass sie in einen oder mehrere Farbstoffe der Formel VI in einer Menge von bis zu etwa 3 Gew.-% enthält.

8. Farbstoffhaltige Flüssigkristallmischung nach einem der Ansprüche 1 bis 7, dadurch gekennzeichnet, dass sie zusätzlich bis zu etwa 50 Gew.-% 4-Cyanobiphenyle der allgemeinen Formel

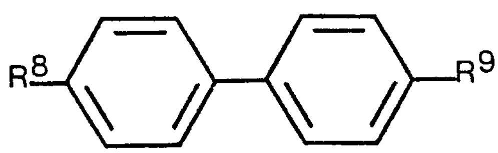

VII

worin $R^8$ eine geradkettige Alkyl- oder Alkoxygruppe mit 2 bis 8 Kohlenstoffatomen und $R^9$ die Cyanogruppe bedeutet,

und/oder bis zu etwa 30 Gew.-%, vorzugsweise bis zu etwa 20 Gew.-% p-(5-Alkyl-2-pyrimidinyl)benzonitrile der allgemeinen Formel

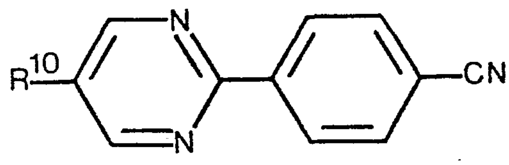

VIII

worin $R^{10}$ eine geradkettige Alkylgruppe mit 2 bis 7 Kohlenstoffatomen bedeutet,

und/oder bis zu etwa 10 Gew.-% 4"-Alkyl-4-cyano-p-terphenyle der Formel

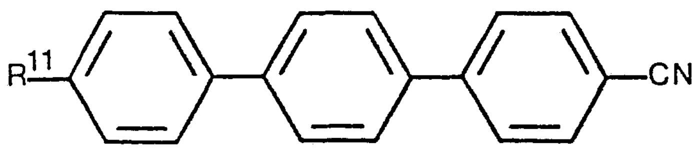

IX

worin $R^{11}$ eine geradkettige Alkylgruppe mit 3 bis 7 Kohlenstoffatomen bedeutet,

und/oder bis zu etwa 15 Gew.-% p-Alkylbenzoesäure-p'-cyanophenylester der allgemeinen Formel

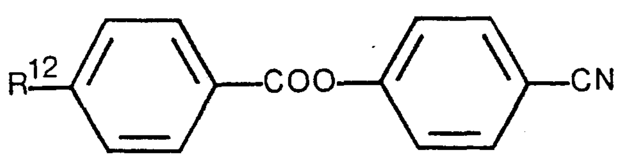

X

worin $R^{12}$ eine geradkettige Alkylgruppe mit 2 bis 7 Kohlenstoffatomen bedeutet,

und/oder bis zu etwa 12 Gew.-% 2-(4-Cyanophenyl)-5-(4-alkylphenyl)pyrimidine der allgemeinen Formel

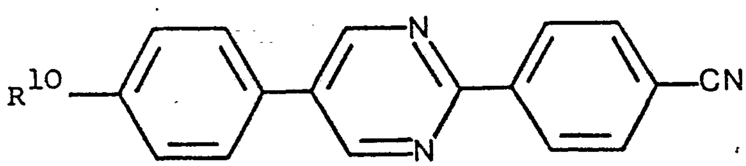

XVI

worin $R^{10}$ eine geradkettige Alkylgruppe mit 2 bis 7 Kohlenstoffatomen bedeutet,
enthält.

9. Farbstoffhaltige Flüssigkristallmischung nach einem der Ansprüche 1 bis 8, dadurch gekennzeichnet, dass sie einen geeigneten optisch aktiven Zusatz, vorzugsweise eine oder mehrere optisch aktive Verbindungen der allgemeinen Formel

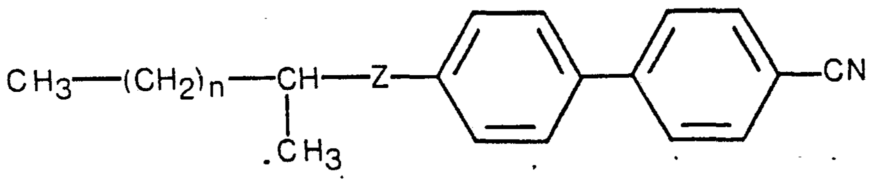
XI

worin Z die Gruppe $-CH_2-$ oder $-CH_2O-$ und n eine ganze Zahl von 1 bis 4 bedeuten,
in einer Menge von bis zu etwa 4 Gew.-% enthält.

10. Farbstoffhaltige Flüssigkristallmischung nach Anspruch 9, dadurch gekennzeichnet, dass sie als optisch aktiven Zusatz (+)- oder (-)-4'-(2-Methylbutyl)-4-cyanobiphenyl bzw. (+)- oder (-)-4'-(2-Methylbutyloxy)-4-cyanobiphenyl enthält.

11. Farbstoffhaltige Flüssigkristallmischung nach einem der Ansprüche 5 bis 10, dadurch gekennzeichnet, dass $R^4$ in der Verbindung der Formel III Heptyl, $R^5$ in der Verbindung der Formel IV Methyl oder Heptyl und $R^7$ in der Verbindung der Formel VI Heptyl bedeuten.

12. Farbstoffhaltige Flüssigkristallmischung nach einem der Ansprüche 1 bis 11, dadurch gekennzeichnet, dass die Gesamtkonzentration der Verbindungen der Formeln VI und XII etwa 0,3 bis etwa 10 Gew.-% beträgt.

0043904

13. Farbstoffhaltige Flüssigkristallmischung nach Anspruch 12, dadurch gekennzeichnet, dass die Gesamtkonzentration der Verbindungen der Formeln VI und XII etwa 0,3 bis etwa 5 Gew.-% beträgt.

14. Farbstoffhaltige Flüssigkristallmischung nach einem der Ansprüche 5 bis 12, dadurch gekennzeichnet, dass die Gesamtkonzentration der Verbindungen der Formeln III, IV und VI etwa 1 bis etwa 10 Gew.-%, vorzugsweise etwa 1,5 bis etwa 7 Gew.-% beträgt.

15. Farbstoffhaltige Flüssigkristallmischung nach einem der Ansprüche 1 bis 14, dadurch gekennzeichnet, dass sich der Gehalt an Farbstoffen aus etwa 0,3 bis etwa 1,4 Gewichtsteilen an Verbindungen der Formel XIII, etwa 0,4 bis etwa 1,4 Gewichtsteilen an Verbindungen der Formel XIV und etwa 1,0 bis etwa 2,2 Gewichtsteilen an Verbindungen der Formel VI zusammensetzt.

16. Farbstoffhaltige Flüssigkristallmischung nach Anspruch 15, dadurch gekennzeichnet, dass sich der Gehalt an Farbstoffen aus etwa 0,75 bis etwa 1,15 Gewichtsteilen an Verbindungen der Formel III, etwa 0,8 bis etwa 1,2 Gewichtsteilen an Verbindungen der Formel IV und etwa 1,4 bis etwa 2,2 Gewichtsteilen an Verbindungen der Formel VI zusammensetzt.

17. Farbstoffhaltige Flüssigkristallmischung nach einem der Ansprüche 1 bis 16, bestehend aus trans-p-[5-(4-Aethylcyclohexyl)-2-pyrimidinyl]benzonitril, trans-p-[5-(4-Pentylcyclohexyl)-2-pyrimidinyl]benzonitril, trans-p-[5-(4-Heptylcyclohexyl)-2-pyrimidinyl]benzonitril, trans-4-Propylcyclohexancarbonsäure-p-cyanophenylester, trans-4-Pentylcyclohexancarbonsäure-p-cyanophenylester, trans-4-Butylcyclohexancarbonsäure-p-(äthoxy)phenylester, trans-4-Pentylcyclohexancarbonsäure-p-(methoxy)phenylester, 4'-Pentyl-4-cyanobiphenyl, einem oder mehreren Farbstoffen der Formeln III und/oder IV, gegebenenfalls einem oder mehreren Farbstoffen der Formel VI und, gegebenenfalls, optisch aktivem 4'-(2-Methylbutyl)-4-cyanobiphenyl und/oder 4'-(2-Methylbutyloxy)-4-cyanobiphenyl.

18. Farbstoffhaltige Flüssigkristallmischung nach einem der Ansprüche 1 bis 17, bestehend aus etwa 7,73 Gewichtsteilen trans-p-[5-(4-Aethylcyclohexyl)-2-pyrimidinyl]-benzonitril, etwa 5,52 Gewichtsteilen trans-p-[5-(4-Pentylcyclohexyl)-2-pyrimidinyl]benzonitril, etwa 14,38 Gewichtsteilen trans-p-[5-(4-Heptylcyclohexyl)-2-pyrimidinyl]benzonitril, etwa 7,64 Gewichtsteilen trans-4-Propylcyclohexancarbonsäure-p-cyanophenylester, etwa 6,95 Gewichtsteilen trans-4-Pentylcyclohexancarbonsäure-p-cyanophenylester, etwa 14,13 Gewichtsteilen trans-4-Butylcyclohexancarbonsäure-p-(äthoxy)phenylester, etwa 12,62 Gewichtsteilen trans-4-Pentylcyclohexancarbonsäure-p-(methoxy)phenylester, etwa 27,28 Gewichtsteilen 4'-Pentyl-4-cyanobiphenyl, etwa 0,95 Gewichtsteilen der Verbindung der Formel III, worin $R^4$ Heptyl bedeutet, etwa 1 Gewichtsteil der Verbindung der Formel IV, worin $R^5$ Methyl oder Heptyl bedeutet, etwa 1,80 Gewichtsteilen der Verbindung der Formel VI, worin $R^7$ Heptyl bedeutet und, gegebenenfalls, bis zu etwa 4 Gewichtsteilen optisch aktivem 4'-(2-Methylbutyl)-4-cyanobiphenyl und/oder 4'-(2-Methylbutyloxy)-4-cyanobiphenyl.

19. Verbindungen der allgemeinen Formel

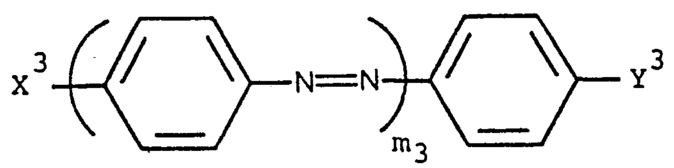

XV

worin $m_3$ für die Zahlen 1 oder 2 steht, und $X^3$ p-Alkoxyphenyl und $Y^3$ Nitro oder Dialkylamino bezeichnen, oder $X^3$ Alkoxy und $Y^3$ p-Nitrophenyl oder p-(Dialkylamino)phenyl darstellen; oder $m_3$ für die Zahl 2 steht, und $X^3$ Alkoxy und $Y^3$ Alkoxy, Nitro oder Dialkylamino bedeuten, oder beide Reste $X^3$ und $Y^3$

Dialkylaminogruppen darstellen; und Alkoxy geradkettige Reste mit 1 bis 12 Kohlenstoffatomen und Alkyl in den Dialkylaminogruppen geradkettige Reste mit 1 bis 4 Kohlenstoffatomen umfassen.

20. Verbindungen nach Anspruch 19, dadurch gekennzeichnet, dass Alkoxy geradkettige Reste mit 3 bis 9, vorzugsweise 5 bis 7 Kohlenstoffatomen und Alkyl in den Dialkylaminogruppen Methyl oder Aethyl, vorzugsweise Methyl bedeuten.

21. Verbindungen der allgemeinen Formel

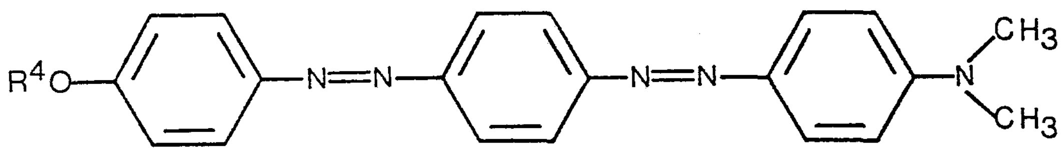

III

worin $R^4$ eine geradkettige Alkylgruppe mit 1 bis 9 Kohlenstoffatomen bedeutet.

22. Verbindungen der in den Ansprüchen 19 bis 21 definierten Formeln als Farbkomponenten in Flüssigkristallmischungen.

23. Verwendung der farbstoffhaltigen Flüssigkristallmischungen gemäss einem der Ansprüche 1 bis 18 für elektrooptische Zwecke.

***